# EUROPÄISCHE PATENTSCHRIFT

(11) **EP 0 860 619 B1**
(45) Veröffentlichungstag und Bekanntmachung des Hinweises auf die Patenterteilung: **17.09.2003**
(21) Anmeldenummer: 98102371.6
(22) Anmeldetag: 11.02.1998
(51) Int. Cl.: F16C 11/06

(54) **Kugelgelenk**
Ball joint
Articulation à rotule

(30) Priorität: 20.02.1997 DE 29702965 U
(43) Veröffentlichungstag der Anmeldung: 26.08.1998
(73) Patentinhaber: Sachsenring Fahrzeugtechnik GmbH, 08058 Zwickau (DE)
(72) Erfinder: Trepte, Jens, Dr., 09128 Chemnitz (DE); Strauch, Jürgen, 08115 Lichtentanne (DE); Wackes, Ullrich, 08115 Lichtentanne (DE)
(74) Vertreter: Rumrich, Gabriele, Dipl.-Ing.

(56) Entgegenhaltungen:
- EP-A- 0 082 638
- EP-A- 0 349 180
- DE-B- 1 168 705
- FR-A- 1 129 472
- GB-A- 1 049 887
- GB-A- 2 159 207
- US-A- 2 879 091
- US-A- 3 108 830
- US-A- 3 561 800
- US-A- 4 253 711
- US-A- 5 037 354

## Beschreibung

Die vorliegende Erfindung bezieht sich auf ein Kugelgelenk gemäß dem Oberbegriff des Anspruchs 1.

Ein derartiges Kugelgelenk ist aus der EP 0 082 638 A1 bekannt. Eine dort verwendete, konstruktiv aufwendige Lagerschale aus Kunststoff besitzt an dem dem offenen Ende des Kugelgelenkgehäuses zugewandten Rand eine umlaufende Nut, deren Rand in zahnförmige Abschnitte unterteilt ist. In die Nuten der zahnförmigen Abschnitte wird ein an die Nut angepaßter Ringfortsatz eines Abdichtringes eingelegt. Beim Einsetzen der Lagerschale in die Aussparung des Kugelgelenkgehäuses werden die äußeren, nach außen stehenden Zähne nach innen verformt und dadurch der Ringfortsatz des Abdichtringes eingeklemmt und dieser und damit der gesamte Abdichtring mechanisch mit der Lagerschale verbunden. Ein Stützring ist im Abdichtring nicht vorgesehen. Der Abdichtring ist von oben her nicht mechanisch gesichert. Die Lagefixierung erfolgt ausschließlich durch Reibungsschluß zwischen der Innenwand des Kugelgelenkgehäuses und der Lagerschale mit dem Abdichtring.

Aus der US 3,108,830 A1 ist ein Kugelgelenk bekannt, dessen Kugel eine Lagerschale trägt, deren Wandstärke wesentlich kleiner ist als der Abstand zwischen Kugel und Kugelgelenkgehäuse. Der verbleibende Zwischenraum ist durch eine Gummischale ausgefüllt, die am offenen Ende in einen nach innen gerichteten Wulst übergeht. Der Wulst ist außen von einem umgebördelten Randteil des Gehäuses bedeckt und dadurch mechanisch lagefixiert. Der Wulst besitzt keinen Stützring, da die Gummischale über die Kugel gestülpt wird, wobei sich der Wulst stark dehnen muß.

Ein ähnliches Kugelgelenk ist aus der US 1,532,195 A1 bekannt.

Bei diesem vorbekannten Kugelgelenk ist das Gehäuse zweiteilig ausgebildet, wobei der obere, etwa becherförmig ausgebildete Gehäuseteil mit dem unteren, etwa U-förmig ausgebildeten Gehäuseteil mit einem nach innen ausgerichteten Flansch über ein Gewinde miteinander verbunden ist. Der nach innen gerichtete Flansch preßt den Dichtungsring direkt oder indirekt über eine Schraubenfeder gegen das Kugelgelenk. Diese konstruktive Ausgestaltung bietet nicht die Möglichkeit, daß der dort verwendete Dichtungsring zusammen mit dem Kugelgelenkgehäuse eine dichte Form für eine Lagerschale aus Kunststoff bildet.

Ein ähnliches Kugelgelenk, allerdings ohne Verwendung eines Abdichtringes an der zapfenseitigen Öffnung des Kugelgelenkgehäuses, ist aus der DE 35 27 870 A1 bekannt. Dort ist zur Dämpfung von Schwingungen auf einem Kugelzapfen eine die Kugeloberfläche bildende Metallschale befestigt, wobei diese Metallschale durch einen Spritzvorgang mit einem Elastomer ausgefüllt ist. Die Kugel ist in eine Kunststoff-Lagerschale und mit dieser in die Aussparung des Kugelgelenkgehäuses eingesetzt und mittels einer eingebördelten Scheibe lagefixiert. Diese Konstruktion ist wegen der Mehrzahl der erforderlichen Bauelemente relativ aufwendig und kostenintensiv, insbesondere bei der Montage.

Mit der vorliegenden Erfindung soll die Aufgabe gelöst werden, ein Kugelgelenk der genannten Art wesentlich zu vereinfachen, so daß es bei mindestens gleich guter Funktion rationeller und kostengünstiger herstellbar ist. Außerdem sollen das Eindringen von Fremdkörpern an der Austrittsseite des Kugelbolzens und das Austreten von Schmiermitteln-soweit vorhanden - mit hoher Sicherheit vermieden werden.

Gelöst wird diese Aufgabe durch die Merkmale des Anspruchs 1.

Mit der Erfindung ist das Kugelgelenk kostengünstig herstellbar und es wird eine einwandfreie Abdichtung erreicht, ohne daß eine ansonsten übliche Manschette vorgesehen werden muß. Gleichzeitig wird eine geräuschmindernde Lagerung der Kugel erzielt.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: ein Kugelgelenk von der Seite im Schnitt,
- Fig. 2: einen vergrößerten Ausschnitt des Dichtungsbereiches der Ausführung gemäß Fig. 1,
- Fig. 2a: einen vergrößerten Ausschnitt dieses Dichtungsbereiches nach Art einer Explosions-darstellung und
- Fig. 3: ein Kugelgelenk mit zusätzlichem Dämpfungselement, von der Seite im Schnitt.

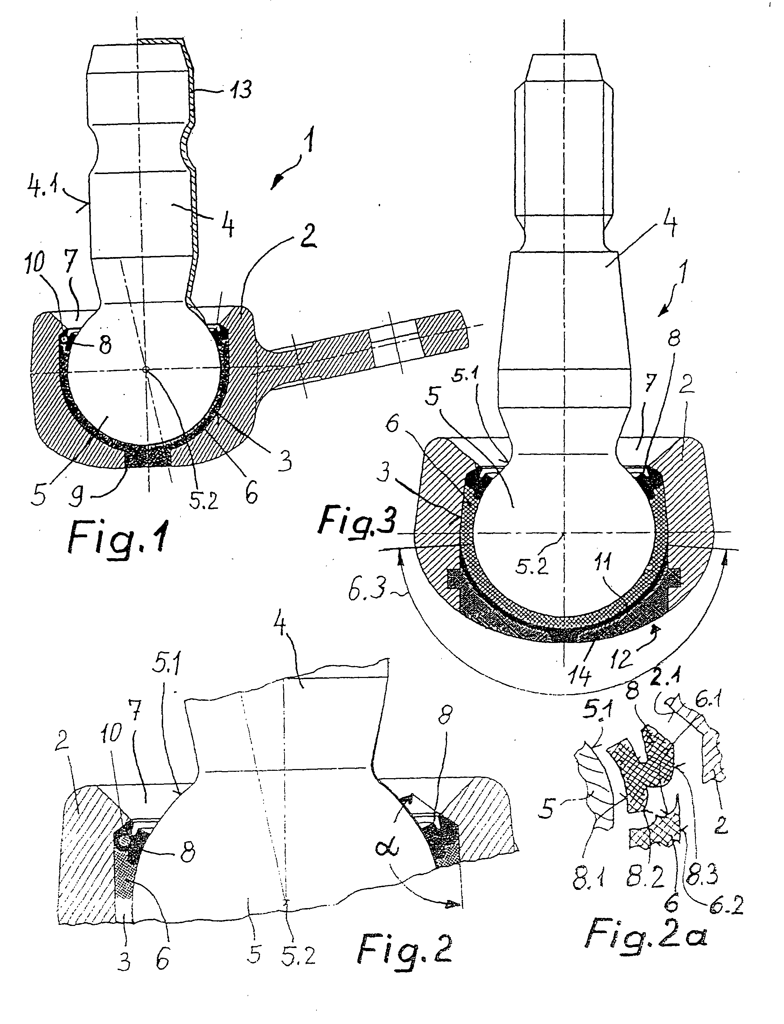

Beim Ausführungsbeispiel gemäß den Fig. 1, 2 und 2a besteht das Kugelgelenk 1 aus einem Kugelgelenkgehäuse 2, das eine Aussparung 3 besitzt, in die eine mit einem Kugelzapfen 4 versehene Kugel 5 unter Zwischenlage einer Lagerschale 6 eingesetzt ist. Auf der zapfenseitigen Öffnung 7 des Kugelgelenkgehäuses 2 ist ein elastischer Abdichtring 8 zwischen dem Kugelgelenkgehäuse 2, der Kugel 5 und der Lagerschale 6 vorgesehen.

Die Herstellung des Kugelgelenks 1 erfolgt derart, daß zunächst die Kugel 5 des Kugelzapfens 4 durch die Öffnung 7 in die Aussparung 3 eingebracht und dann der Abdichtring 8 eingeknöpft, z.B. durch Verformung eingedrückt wird. Nach Fixierung des Kugelzapfens 4 mit der Kugel 5 in der vorgesehenen Endlage wird über eine Angußöffnung 9 im Kugelgelenkgehäuse 2 der verbleibende Hohlraum zwischen Kugelgelenkgehäuse 2 und Kugel 5 mit einem elastomeren Kunststoff aus einem Material mit guten Gleitreibungseigenschaften ausgespritzt und so die Lagerschale 6 gebildet. Durch die Lagefixierung und durch den Spritzdruck ist der Abdichtring 8 elastisch federnd vorgespannt. Dadurch liegt er mit einem ersten, inneren, kreisförmigen Wandabschnitt 8.1 federnd vorgespannt an der Oberfläche 5.1 der Kugel 5 an. An den ersten Wandabschnitt 8.1 schließt ein zweiter kreisförmiger Wandabschnitt 8.2 an, der an der Stirnseite 6.1 der Lagerschale 6 unter Vorspannung anliegt. Mit einem an diesen angrenzenden dritten kreisförmigen Wandabschnitt 8.3 liegt er an einem kreisförmigen Innenwandabschnitt 2.1 des Kugelgelenkgehäuses 2 unter Vorspannung an.

Durch diese Konstruktion kann bei Zugbelastung zwischen Kugel 5 und Kugelgelenkgehäuse 2 die Kugel 5 elastisch federnd zur Öffnung 7 hin verschoben werden. Infolgedessen werden auf das Lager einwirkende Vibrationen, Lärmgeräusche oder dgl. gedämpft. Der unter Vorspannung stehende Abdichtring 8 bewirkt weiterhin eine sehr gute Dichtung zwischen Kugel 5 und Kugelgelenkgehäuse 2, so daß Fremdkörper auch ohne Anbringung einer Dichtungsmanschette nicht in das Innere des Kugelgelenks 1 eindringen können.

Zur Versteifung des Abdichtrings 8 ist dieser mit einem Stützring 10 versehen. Dieser Stützring 10 ist in den Abdichtring 8 eingeformt. Hierdurch wird beispielsweise auch bei großer Öffnung 7, die das Einsetzen der Kugel 5 von dieser Seite aus gestattet, eine einwandfreie Halterung der Kugel 5 gewährleistet. Der Stützring 10 kann aus Metall, beispielsweise aus Stahl, Edelstahl, Bronze, Kupfer, Messing oder dgl. bestehen. Er kann aber auch aus einem geeigneten festen Kunststoff, beispielsweise aus oder auf der Basis von Polyurethan, Polyethylen, Polyamid, Polyimid oder dgl., hergestellt sein.

Der Querschnitt des Abdichtringes 8 kann rund oder elliptisch sein. Er kann aber auch L- oder V-förmig ausgebildet sein (vgl. Fig. 2 und 2a), wobei der eine Schenkel an der Kugeloberfläche 5.1 und der andere Schenkel am Innenwandabschnitt 2.1 des Kugelgelenkgehäuses 2 unter Vorspannung anliegt.

Um günstige Druckverteilungen zu erzielen, liegen die Wandabschnitte 8.1, 8.2 und 8.3 zu der Richtung zum Zentrum 5.2 der Kugel 5 hin hintereinander bzw. sie liegen einander gegenüber.

Zur Lagefixierung des Abdichtringes 8 im Innenwandabschnitt 2.1 des Kugelgelenkgehäuses 2 besitzt der Innenwandabschnitt 2.1 einen stumpfen bis spitzen Winkel α.

Gemäß einer weiteren, in Fig. 3 dargestellten Ausführungsform der Erfindung ist zwischen der Lagerschale 6 und der Aussparung 3 des Kugelgelenkgehäuses 2 ein elastisches Dämpfungselement 11 vorgesehen. Dieses Dämpfungselement 11 dient zur elastischen Abfederung von Druckbelastungen zwischen Kugel 5 und Kugelgelenkgehäuse 2. Die Außenseite 6.2 der Lagerschale 6 ist hierzu bevorzugt auf dem dem Abdichtring 8 gegenüberliegenden Kugelschalenabschnitt 6.3 oder der Kugelhalbschale mit dem Dämpfungselement 11 fest verbunden. Beispielsweise ist er angeformt, anvulkanisiert oder in sonst günstiger Weise kraft-, form- oder stoffschlüssig mit diesem verbunden. Die Herstellung kann beispielsweise so erfolgen, daß in einem ersten Formprozeß die Lagerschale 6 eingespritzt und anschließend, nach teilweisem Zurückfahren dieses Formwerkzeugs, das Material für das Dämpfungselement 11 eingespritzt wird. Als Material für das Dämpfungselement 11 dient vorzugsweise ein Elastomer auf Kunststoffbasis, Kautschuk oder Gummi.

Bei Verwendung einer ausreichend großen Öffnung 12 im Kugelgelenkgehäuse 2 gegenüber der Öffnung 7 kann der Kugelzapfen 4 mit der Kugel 5 auch von dort aus, also in der Zeichnung gemäß Fig. 3 von unten her, eingesetzt werden. Anschließend wird nach Lagefixierung der Kugel 5, nach dem Einspritzen der Lagerschale 6 und des Dämpfungselements 11 die Öffnung 12 mit einem Abschlußelement 14 aus einem sehr harten, zähen Material ausgespritzt. Die Öffnung 12 kann aber auch in an sich bekannter Weise durch Einlegen einer Scheibe oder Platte und anschließendem Einbördeln derselben verschlossen werden.

Gemäß einer weiteren vorteilhaften Ausgestaltung der Erfindung kann das Dämpfungselement 11 als geschlossene, doppelwandige Schale, beispielsweise nach Art einer Blase, ausgebildet sein. Diese Blase kann mit einem Druckgas gefüllt oder nachfüllbar sein.

Weiterhin kann vorteilhaft die Oberfläche 4.1 des Kugelzapfens 4 mit einer Antikorrosionsschicht 13 versehen sein, wie anhand der Fig. 1, rechte Zeichnungshälfte, dargestellt ist. Die Antikorrosionsschicht 13 kann aus einem geeigneten Metall, wie Zinn, Zink, Kupfer, Messing, Bronze, Edelstahl, Nickel, Chrom oder dgl. bestehen. Es kann auch, gegebenenfalls zusätzlich, als äußere Schicht, eine Antikorrosionsschicht 13 aus einem geeigneten Kunststoff vorgesehen sein.

## Patentansprüche

1. Kugelgelenk, bestehend aus einem Kugelgelenkgehäuse (2) mit einer in einer Aussparung (3) desselben vorhandenen Lagerschale (6) aus Kunststoff, in der die Kugel (5) eines Kugelzapfens (4) gelagert ist und als Abschluß an der zapfenseitigen Öffnung (7) des Kugelgelenkgehäuses (2) ein elastischer Abdichtring (8) zwischen der Kugel (5) und dem oberen offenen Ende des Kugelgelenkgehäuses (2) lagefixiert ist, welcher die im Bereich des Abdichtrings (8) sich über den gesamten Abstand zwischen der Kugel (5) und der Innenwand des Kugelgelenkgehäuses (2) erstreckenden Lagerschale (6) abdichtet, **dadurch gekennzeichnet, daß** der Abdichtring (8) unter Vorspannung mit einem ersten kreisförmigen Wandabschnitt (8.1) an der Kugeloberfläche (5.1), mit einem angrenzenden zweiten kreisförmigen Wandabschnitt (8.2) fest an der Stirnfläche (6.1) der Lagerschale (6) und mit einem an den zweiten Wandabschnitt (8.2) angrenzenden dritten kreisförmigen Wandabschnitt (8.3) an einem . kreisförmigen Innenwandabschnitt (2.1) des Kugelgelenkgehäuses (2) anliegt, und daß der Abdichtring (8) einen eingeformten Stützring (10) aufweist.

2. Kugelgelenk nach Anspruch 1, **dadurch gekennzeichnet, daß** der Stützring (10) aus Metall, insbesondere aus einem der Metalle Stahl, Edelstahl, Bronze, Kupfer, Messing, besteht.

3. Kugelgelenk nach Anspruch 1, **dadurch gekennzeichnet, daß** der Stützring (10) aus Kunststoff, insbesondere aus einem der Kunststoffe Polyurethan, Polyethylen, Polyamid, Polyimid oder aus Mischungen von wenigstens zwei dieser Materialien besteht.

4. Kugelgelenk nach einem der Ansprüche 1 bis 3, **dadurch gekennzeichnet, daß** der Querschnitt des Abdichtrings (8) rund oder elliptisch ist.

5. Kugelgelenk nach einem der Ansprüche 1 bis 3, **dadurch gekennzeichnet, daß** der Querschnitt des Abdichtrings (8) L-oder V-Form besitzt, wobei der eine Schenkel an der Oberfläche (5.1) der Kugel (5) und der andere Schenkel am Innenwandabschnitt (2.1) des Kugelgelenkgehäuses (2) unter Vorspannung anliegt.

6. Kugelgelenk nach einem der Ansprüche 1 bis 5, **dadurch gekennzeichnet, daß** der am Innenwandabschnitt (2.1) des Kugelgelenkgehäuses (2) abgestützte Wandabschnitt (8.3) und der an der Oberfläche (5.1) der Kugel (5) abgestützte Wandabschnitt (8.1) des Abdichtrings (8) in Richtung zum Zentrum (5.2) der Kugel (5) einander gegenüberliegend angeordnet sind.

7. Kugelgelenk nach einem der Ansprüche 1 bis 6, **dadurch gekennzeichnet, daß** der Innenwandabschnitt (2.1) einen stumpfen bis spitzen Winkel (α) einschließt, in dem der Abdichtring (8) mit seinem dritten Wandabschnitt (8.3) unter Vorspannung anliegt.

8. Kugelgelenk nach einem der Ansprüche 1 bis 7, **dadurch gekennzeichnet, daß** an der Außenseite (6.2) der Lagerschale (6) auf dem dem Abdichtring (8) gegenüberliegenden Kugelabschnitt (6.3) bzw. der Kugelhalbschale ein an diese angepaßtes elastisches Dämpfungselement (11) vorgesehen ist.

9. Kugelgelenk nach Anspruch 8, **dadurch gekennzeichnet, daß** das Dämpfungselement (11) und die Lagerschale (6) kraft-, form- und/oder stoffschlüssig miteinander verbunden sind.

10. Kugelgelenk nach Anspruch 8 oder 9, **dadurch gekennzeichnet, daß** das Dämpfungselement (11) aus einem Elastomer, Kautschuk oder Gummi besteht.

11. Kugelgelenk nach einem der Ansprüche 8 bis 10, **dadurch gekennzeichnet, daß** das Dämpfungselement (11) geschlossen-doppelwandig ausgebildet und mit einem Druckgas gefüllt oder füllbar ist.

12. Kugelgelenk nach einem der Ansprüche 1 bis 12, **dadurch gekennzeichnet, daß** die Oberfläche (4.1) des Kugelzapfens (4) mit einer Antikorrosionsschicht (13) versehen ist.

13. Kugelgelenk nach Anspruch 12, **dadurch gekennzeichnet, daß** die Antikorrosionsschicht (13) aus einem nicht oder schlecht korrodierendem Metall, insbesondere aus Zinn, Zink, Edelstahl, Nickel, Chrom oder dgl. besteht.

14. Kugelgelenk nach Anspruch 12 oder 13, **dadurch gekennzeichnet, daß** die bzw. die oberste Antikorrosionsschicht (13) aus Kunststoff besteht.

## Claims

1. A ball joint, consisting of a ball joint housing (2) with a bearing shell (6) which is made of plastic, which is present in a recess (3) of said housing and in which the ball (5) of a spherical gudgeon (4) is held and an elastic sealing ring (8) is positionally fixed between the ball (5) and the upper open end of the ball joint housing (2) as a closure on the gudgeon-side opening (7) of the ball joint housing (2), which sealing ring seals off the bearing shell (6) extending in the region of the sealing ring (8) over the entire distance between the ball (5) and the inside wall of the ball joint housing (2), **characterized in that** the sealing ring (8) rests under pretension with a first circular wall section (8.1) on the ball surface (5.1), with an adjacent second circular wall section (8.2) rigidly on the face surface (6.1) of the bearing shell (6) and with a third circular wall section (8.3) adjacent to the second wall section (8.2) on a circular inside wall section (2.1) of the ball joint housing (2), and that the sealing ring (8) comprises a supporting ring (10) which is molded in.

2. A ball joint as claimed in claim 1, **characterized in that** the supporting ring (10) consists of metal, especially one of the metals of steel, stainless steel, bronze, copper, brass.

3. A ball joint as claimed in claim 1, **characterized in that** the supporting ring (10) consists of plastic, especially one of the plastic materials of polyurethane, polyethylene, polyamide, polyimide, or of mixtures of at least two of said materials.

4. A ball joint as claimed in one of the claims 1 to 3, **characterized in that** the cross section of the sealing ring (8) is round or elliptical.

5. A ball joint as claimed in one of the claims 1 to 3, **characterized in that** the cross section of the sealing ring (8) is L- or V-shaped, with the one leg resting under pretension on the surface (5.1) of the ball (5) and the other leg on the inside wall section (2.1) of the ball joint housing (2).

6. A ball joint as claimed in one of the claims 1 to 5, **characterized in that** the wall section (8.3) of the sealing ring (8) which is supported on the inside wall section (2.1) of the ball joint housing (3) and the wall section (8.1) which is supported on the surface (5.1) of the ball (5) are arranged in a mutually opposite fashion in the direction towards the center (5.2) of the ball (5).

7. A ball joint as claimed in one of the claims 1 to 6, **characterized in that** the inside wall section (2.1) encloses an obtuse to acute angle ( ) in which the sealing ring (8) rests with its third wall section (8.3) under pretension.

8. A ball joint as claimed in one of the claims 1 to 7, **characterized in that** on the outside (6.2) of the bearing shell (6) on the ball section (6.3) opposite to the sealing ring (8) or the shell of the ball an elastic damping element (11) is provided which is adjusted to the same.

9. A ball joint as claimed in claim 8, **characterized in that** the damping element (11) and the bearing shell (6) are mutually connected in a non-positive, positive and/or material manner.

10. A ball joint as claimed in claim 8 or 9, **characterized in that** the damping element (11) consists of an elastomer, caoutchouc or rubber.

11. A ball joint as claimed in one of the claims 8 to 10, **characterized in that** the damping element (11) is provided with a closed, double-wall arrangement and is filled or can be filled without compressed gas.

12. A ball joint as claimed in one of the claims 1 to 12, **characterized in that** the surface (4.1) of the spherical gudgeon (4) is provided with an anti-corrosion layer (13).

13. A ball joint as claimed in claim 12, **characterized in that** the anti-corrosion layer (13) consists of a metal that is non-corrosive or shows only low corrosive properties, especially tin, zinc, stainless steel, nickel, chromium or the like.

14. A ball joint as claimed in claim 12 to 13, **characterized in that** the uppermost anti-corrosion layer (13) consists of plastic.

## Revendications

1. Rotule se composant d'un logement de rotule (2) comprenant un coussinet (6) situé dans un évidement (3) du logement, se composant de matière plastique, coussinet dans lequel est logée la bille (5) d'un tourillon sphérique (4) et dans lequel une bague d'étanchéité élastique (8) est fixée en position entre la bille (5) et l'extrémité supérieure ouverte du logement de rotule (2) pour fermer l'ouverture (7) côté tourillon du logement de rotule (2), bague qui étanchéifie le coussinet (6) s'étendant dans la zone de la barre d'étanchéité (8) sur toute la distance entre la bille (5) et la paroi interne du logement de rotule (2), **caractérisée en ce que** la bague d'étanchéité (8) s'applique sous précontrainte par une première section circulaire de paroi (8.1) contre la surface sphérique (6.1), par une seconde section de paroi circulaire attenante (8.2) de manière solidaire contre la surface frontale (6.1) du coussinet (6) et par une troisième section de paroi circulaire (8.3) attenante à la seconde section de paroi (8.2) contre une section de paroi interne circulaire (2.1) du logement de rotule (2), et **en ce que** la bague d'étanchéité (8) présente une bague de soutien moulée (10).

2. Rotule selon la revendication 1, **caractérisée en ce que** la bague de soutien (10) se compose de métal, en particulier de l'un des métaux tels que l'acier, l'acier fin, le bronze, le cuivre, le laiton.

3. Rotule selon la revendication 1, **caractérisée en ce que** la bague de soutien (10) se compose de matière plastique, en particulier de l'une des matières plastiques telles que le polyuréthane, le polyéthylène, le polyamide, le polyimide ou un mélange d'au moins deux de ces matériaux.

4. Rotule selon l'une des revendications 1 à 3, **caractérisée en ce que** la section transversale de la bague d'étanchéité (8) est ronde ou elliptique.

5. Rotule selon l'une des revendications 1 à 3, **caractérisée en ce que** la section transversale de la bague d'étanchéité (8) possède une forme en L ou en V, l'un des côté venant s'appliquer sous précontrainte contre la surface (5.1) de la bille (5) et l'autre côté contre la section de paroi interne (2.1) du logement de rotule (2).

6. Rotule selon l'une des revendications 1 à 5, **caractérisée en ce que** la section de paroi (8.3), prenant appui contre la section de paroi interne (2.1) du logement de rotule (2), et la section de paroi (8.1), prenant appui contre la surface (5.1) de la bille (5), de la bague d'étanchéité (8), sont disposées en opposition mutuelle en direction du centre (5.2) de la bille (5).

7. Rotule selon l'une des revendications 1 à 6, **caractérisée en ce que** la section de paroi interne (2.1) forme un angle obtus à aigu (α) dans lequel s'applique la bague d'étanchéité (8) sous précontrainte avec sa troisième section de paroi (8.3).

8. Rotule selon l'une des revendications 1 à 7, **caractérisée en ce que** sur la face externe (6.2) du coussinet (6), il est prévu, sur la section sphérique (6.3) opposée à la bague d'étanchéité (8), respectivement sur le demi-coussinet un élément d'amortissement élastique (11), adapté à ce dernier.

9. Rotule selon la revendication 8, **caractérisée en ce que** l'élément d'amortissement (11) et le coussinet (6) sont reliés entre eux par adhérence des formes, des matières et/ou par adhérence mécanique.

10. Rotule selon la revendication 8 ou 9, **caractérisée en ce que** l'élément d'amortissement (11) se compose d'élastomère, de caoutchouc ou de gomme.

11. Rotule selon l'une des revendications 8 à 10, **caractérisée en ce que** l'élément d'amortissement (11) est réalisé fermé à double paroi et est rempli d'un gaz comprimé.

12. Rotule selon l'une des revendications 1 à 2, **caractérisée en ce que** la surface (4.1) du tourillon sphérique (4) est munie d'une couche anti-corrosion (13).

13. Rotule selon la revendication 12, **caractérisée en ce que** la couche anti-corrosion (13) se compose d'un métal anti-corrosif ou difficilement corrosif, en particulier, en étain, zinc, acier fin, nickel, chrome ou similaire.

14. Rotule selon la revendication 12 ou 13, **caractérisé en ce que** la couche anti-corrosion en particulier supérieure (13) se compose de matière plastique.
